# EUROPÄISCHE PATENTANMELDUNG

(11) **EP 3 376 733 A1**
(43) Veröffentlichungstag der Anmeldung: **19.09.2018**
(21) Anmeldenummer: 17161510.7
(22) Anmeldetag: 17.03.2017
(51) Int. Cl.: H04L 29/06, H04L 9/08, H04W 12/04

(54) **VERFAHREN ZUR DATENÜBERTRAGUNG, DATENÜBERTRAGUNGSSYSTEM UND ANLERNMODUL**

(71) Anmelder: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE)

(57) **Zusammenfassung**

Ein Verfahren zur Datenübertragung zwischen einem ersten Zielgerät (31, 42 - 47) mit einer ersten Sicherheitsinformation (21, 23) und einem zweiten Zielgerät (32, 42 - 47) mit einer zweiten Sicherheitsinformation (22, 24), wobei die erste und die zweite Sicherheitsinformation (21 - 24) zur Datenübertragung miteinander verknüpft sind, umfassend:
Koppeln (S2) eines dem ersten Zielgerät (31, 42 - 47) zugeordneten ersten Anlernmoduls (11, 13, 15 - 18) mit einem dem zweiten Zielgerät (32, 42 - 47) zugeordneten zweiten Anlernmodul (12, 14 -18);
Erzeugen (S3) der ersten und der zweiten Sicherheitsinformation (21 - 24) in den Anlernmodulen (11 - 18) und Speichern der Sicherheitsinformationen (21 - 24) in den jeweiligen Anlernmodulen (11 - 18); Koppeln (S5) des ersten Anlernmoduls (11, 13, 15 - 18) mit dem ersten Zielgerät (31, 42 - 47) und des zweiten Anlernmoduls 11 - 178) mit dem zweiten Zielgerät (32, 42 - 47);
Übertragen (S6) der Sicherheitsinformationen (21 - 24) von den Anlernmodulen (11 - 18) in die jeweiligen Zielgeräte (31, 32, 42 - 47); und
Übertragen (S7) von Daten zwischen dem ersten und dem zweiten Zielgerät (31, 32, 42 - 47) mit Hilfe der ersten und zweiten Sicherheitsinformationen (21 - 24).

## Beschreibung

Die vorliegende Erfindung betrifft ein Verfahren zur Datenübertragung, ein Datenübertragungssystem und ein Anlernmodul.

Zwischen mehreren miteinander kommunizierenden Kommunikationsgeräten, beispielsweise zwischen Datenverarbeitungs- und Steuerungsvorrichtungen in einem Automatisierungssystem in der Industrie, wird häufig eine sichere Datenübertragung benötigt, um Angriffe gegen die Informationssicherheit des Automatisierungssystems, beispielsweise eine Manipulation oder Ausspähung des Automatisierungssystems, abzuwehren. Solch eine sichere Datenübertragung kann durch ein sicheres Einrichten von miteinander kompatiblen Sicherheitskonfigurationen oder Sicherheitsinformationen auf die jeweiligen Kommunikationsgeräte erreicht werden.

In der DE 10 2010 031 931 A1 wird ein sicheres Einrichten einer drahtlosen Kommunikationseinrichtung beschrieben, in dem eine drahtlose Authentisierungseinrichtung eine Authentisierungsinformation an die drahtlose Kommunikationseinrichtung sendet, welche die Authentisierungsinformation an eine Basiseinrichtung weitersendet. Die Basiseinrichtung überprüft die erhaltene Authentisierungsinformation und bindet die drahtlose Kommunikationseinrichtung in Abhängigkeit des Ergebnisses der Überprüfung in ein Netzwerk ein.

In der DE 10 2005 045 118 B4 wird ferner ein Anmeldeverfahren zwischen Teilnehmern eines drahtlos arbeitenden Kommunikationssystems beschrieben, bei dem hochfrequente elektromagnetische Schlüsseletablierungssignale nach dem RFID-Standard ausgetauscht werden.

Vor diesem Hintergrund besteht eine Aufgabe der vorliegenden Erfindung darin, ein verbessertes Verfahren zur sicheren Datenübertragung zwischen mehreren Zielgeräten bereitzustellen.

Eine weitere Aufgabe besteht darin, ein verbessertes Datenübertragungssystem und ein verbessertes Anlernmodul bereitzustellen.

Demgemäß wird ein Verfahren zur sicheren Datenübertragung zwischen einem ersten Zielgerät mit einer ersten Sicherheitsinformation und einem zweiten Zielgerät mit einer zweiten Sicherheitsinformation vorgeschlagen, wobei die erste und die zweite Sicherheitsinformation miteinander verknüpft sind und die Datenübertragung zwischen dem ersten und dem zweiten Zielgerät erfolgt, wenn insbesondere die erste Sicherheitsinformation in dem ersten Zielgerät vorliegt und die zweite Sicherheitsinformation in dem zweiten Zielgerät vorliegt. Das Verfahren umfasst:
Koppeln eines dem ersten Zielgerät zugeordneten ersten Anlernmoduls mit einem dem zweiten Zielgerät zugeordneten zweiten Anlernmodul;
Zusammenwirken der gekoppelten ersten und zweiten Anlernmodule zum Bestimmen der ersten und der zweiten Sicherheitsinformation und Speichern der ersten Sicherheitsinformation in das erste Anlernmodul und der zweiten Sicherheitsinformation in das zweite Anlernmodul;
Koppeln des ersten Anlernmoduls mit dem ersten Zielgerät und des zweiten Anlernmoduls mit dem zweiten Zielgerät;
Übertragen der ersten Sicherheitsinformation von dem ersten Anlernmodul in das erste Zielgerät und Übertragen der zweiten Sicherheitsinformation von dem zweiten Anlernmodul in das zweite Zielgerät; und
Herstellen der sicheren Datenübertragung zwischen dem ersten und dem zweiten Zielgerät mithilfe der zusammenwirkenden ersten und zweiten Sicherheitsinformationen.

Vor dem Koppeln der Anlernmodule an die Zielgeräte kann ein Entkoppeln der Anlernmodule voneinander erfolgen. Insofern kann der Schritt: Entkoppeln der ersten und zweiten Anlernmodule, vor dem Koppeln des ersten Anlernmoduls mit dem ersten Zielgerät und des zweiten Anlernmoduls mit dem zweiten Zielgerät durchgeführt werden.

Es ist auch möglich, die Anlernmodule an den Zielgeräten in gekoppeltem Zustand zu belassen und gleichzeitig die Datenübertragung zwischen den Zielgeräten vorzunehmen.

Unter Koppeln wird insbesondere eine kommunikative Kopplung verstanden. Es ist dazu nicht notwendig, eine physikalische oder mechanische Kopplung zu vollziehen.

In Ausführungsformen erfolgt ein jeweiliges Koppeln durch Aufbau einer vertrauenswürdigen Kommunikationsverbindung zwischen den zu koppelnden Modulen und/oder Geräten, und ein Entkoppeln besteht aus der Beendigung der Kommunikation zwischen den gekoppelten Modulen und/oder Geräten.

In weiteren Ausführungsformen können die Module und/oder Geräte direkt mechanisch und/oder elektronisch miteinander verbunden oder gekoppelt werden.

Gemäß einer Ausführungsform wird ein Datenübertragungssystem mit einem ersten und einem zweiten Zielgerät, und mit einem ersten und einem zweiten Anlernmodul vorgeschlagen, wobei
das erste und das zweite Anlernmodul korrespondierende Schnittstellen aufweisen, über die das erste und das zweite Anlernmodul koppelbar sind;
das erste und das zweite Anlernmodul dazu eingerichtet sind, ausschließlich in einem gekoppelten Zustand eine erste und eine zweite Sicherheitsinformation abzuspeichern;
das erste und das zweite Anlernmodul zusätzliche Schnittstellen aufweisen, über die das erste und das zweite Anlernmodul mit dem ersten und dem zweiten Zielgerät derart koppelbar sind, dass die erste und zweite Sicherheitsinformation in das erste und das zweite Zielgerät übertragbar ist.

Gemäß einer weiteren Ausführungsform ist das Datenübertragungssystem dazu eingerichtet, dass es das zuvor und im Folgenden beschriebene Verfahren durchführt.

Das erste und das zweite Zielgerät, im Folgenden auch "Zielgeräte", sind insbesondere Teil eines Automatisierungssystems für industrielle Anwendungen. Beispielsweise können die Zielgeräte Feldgeräte, insbesondere Sensoren und Aktoren, Steuerungsgeräte, Überwachungsgeräte, Schutzgeräte, Automatisierungsnetze, Backend-Dienste, insbesondere Cloud-basierte Systeme, IoT-Geräte und/oder Speichereinrichtungen umfassen. Die Zielgeräte können über eine Datenaustauschtechnologie wie Bluetooth, WLAN, ein Mobilfunknetz oder das Internet verbunden sein, sodass die Zielgeräte Daten über die Datenaustauschtechnologie übertragen/austauschen können. Die übertragenen Daten umfassen beispielsweise durch einen Sensor erzeugte Werte, die an eine Speichereinrichtung gesendet werden, oder durch Steuerungsgeräte erzeugte Steuerbefehle, die an einen Aktor gesendet werden.

Insbesondere ist zur Datenübertragung zwischen den zwei Zielgeräten notwendig, dass in dem ersten Zielgerät eine erste Sicherheitsinformation und in dem zweiten Zielgerät eine zweite Sicherheitsinformation vorliegt. Dadurch kann insbesondere eine sichere Datenübertragung erfolgen, und ein böswilliger Eingriff auf die Daten von Außerhalb kann vermieden werden. Im Folgenden werden die erste Sicherheitsinformation und die zweite Sicherheitsinformation auch als "Sicherheitsinformationen" bezeichnet. Die Sicherheitsinformationen können beispielsweise in einem sicheren Speicher in den jeweiligen Zielgeräten gespeichert werden. Die Sicherheitsinformationen können in Sicherheits-Gateways der jeweiligen Zielgeräte enthalten sein. Die erste und die zweite Sicherheitsinformation können identisch oder unterschiedlich sein.

Insbesondere können die Sicherheitsinformationen durch die Zielgeräte unverändert verwendet werden, um eine zur Datenübertragung geeignete Verbindung zwischen den Zielgeräten herzustellen. Die Zielgeräte können auch die empfangenen Sicherheitsinformationen verarbeiten, um eine sichere Kopplung zwischen den Zielgeräten herzustellen.

Die Sicherheitsinformationen können insbesondere verwendet werden, um Daten, die zwischen den Zielgeräten übertragen werden, kryptografisch zu schützen. Als kryptografischer Schutz kann ein kryptografischer Schlüssel oder ein kryptografischer Schlüsselstrom verwendet werden, mit dem ausgetauschte Daten zumindest teilweise verschlüsselt und entschlüsselt werden. Der kryptografische Schutz kann auch mittels eines Cipher-Suite-Verfahrens erstellt werden, beispielsweise mittels einer Authentifizierung oder einer Verschlüsselung. Zudem können die übertragenen Daten durch eine kryptografische Prüfsumme geschützt sein. Es ist denkbar, dass zur Berechnung und/oder Prüfung einer Prüfsumme die Sicherheitsinformationen eingesetzt werden. Eine kryptografische Prüfsumme kann insbesondere ein Nachrichtenauthentisierungscode (Message Authentication Code) oder eine digitale Signatur sein.

Weiterhin können die Sicherheitsinformationen eine Security-Policy, insbesondere Voraussetzungen für eine sichere Datenübertragung oder Netzwerkfilterregeln, enthalten.

In Ausführungsformen dienen die Sicherheitsinformationen der Authentisierung der Zielgeräte im späteren Einsatz, insbesondere als Feldgerät. Die Zielgeräte werden insbesondere durch die an sie übertragenen Sicherheitsinformationen hinsichtlich ihrer Integrität charakterisiert. Insofern erfolgt eine spätere Datenübertragung "mit Hilfe" der Sicherheitsinformationen.

Die Sicherheitsinformationen werden durch ein erstes und ein zweites Anlernmodul, im Folgenden "Anlernmodule", erzeugt und an die Zielgeräte übertragen. Das Anlernmodul kann auch als ein Pairing-Zusatzgerät bezeichnet werden. Jedem Zielgerät kann ein Anlernmodul zugeordnet sein. Das Anlernmodul kann eine physikalisch von dem Zielgerät trennbare Einrichtung sein. Insbesondere ist das Anlernmodul eine Einrichtung mit einem technischen Speicher zum Speichern der Sicherheitsinformation und mit einer physikalischen Schnittstelle, um auf den Speicher zuzugreifen.

Beim Koppeln der zwei Anlernmodule können die Anlernmodule mithilfe eines Kabels oder kabellos miteinander verbunden werde, sodass sie miteinander kommunizieren können. Insbesondere verfügen die Anlernmodule hierzu über miteinander koppelbare korrespondierende Schnittstellen, wie Stecker, insbesondere USB-Stecker, Bluetooth-, Zigbee- oder WLAN-Schnittstellen. Eine Verbindung zwischen den zwei Anlernmodulen kann über eine existierende Verbindung der zwei Zielgeräte erfolgen. In diesem Fall sind die zwei Anlernmodule bereits mit den zwei Zielgeräten gekoppelt. Ferner kann eine Verbindung zwischen den zwei Anlernmodulen über einen von den Zielgeräten unabhängigen Kanal erfolgen.

Die miteinander gekoppelten Anlernmodule können insbesondere in einem Anlernvorgang zusammen die erste und die zweite Sicherheitsinformation bestimmen. Während des Anlernvorgangs tauschen die Anlernmodule insbesondere Daten über die Verbindung zwischen den zwei Anlernmodulen aus. Ein Datenaustausch kann hierbei zum Beispiel unter Verwendung eines Diffie-Hellman-Protokolls über einen nicht-authentisierten TLS- Kommunikationskanal (TLS steht für "Transport Layer Security") oder mit einem SRP-Protokoll (SRP steht für "Secure Remote Password") erfolgen. Weiterhin kann zum Datenaustausch ein Diffie-Hellman-Protokoll verwendet werden, das über einen nicht-authentisierten TLS-Kommunikationskanal oder über ein SRP-Protokoll übertragen wird.

Das Anlernen der Sicherheitskonfigurationen kann lediglich mithilfe der Anlernmodule erfolgen. Hierzu kann ein in den Anlernmodulen vorgespeicherter Algorithmus verwendet werden. Beispielsweise kann eine in einem der Anlernmodule generierte Sicherheitskonfiguration in das andere Anlernmodul übertragen werden. Außerdem können die Sicherheitsinformationen durch eine gemeinsame Berechnung der beiden Anlernmodule berechnet werden.

Das Anlernen der Sicherheitskonfigurationen kann auch mithilfe einer zusätzlichen Anlerneinrichtung erfolgen, die beispielsweise über Schnittstelle, insbesondere über Anschlussstecker an die gekoppelten Anlernmodule gekoppelt wird und den Anlernmodulen eine der Sicherheitsinformationen oder eine Information zur Berechnung der Sicherheitsinformationen überträgt.

Das Entkoppeln der Anlernmodule voneinander bedeutet hier insbesondere, dass die Anlernmodule derart voneinander getrennt werden, dass sie nicht mehr miteinander gekoppelt sind und nicht mehr miteinander kommunizieren können. Dieses kann beispielsweise durch eine räumliche Verlagerung der Anlernmodule erfolgen.

Die jeweiligen Anlernmodule werden beispielsweise über eine zusätzliche Schnittstelle mit den jeweiligen Zielgeräten gekoppelt. Die Kopplung kann mit einem Kabel oder kabellos erfolgen. Die erste Sicherheitsinformation wird von dem ersten Anlernmodul in das erste Zielgerät übertragen, während die zweite Sicherheitsinformation von dem zweiten Anlernmodul in das zweite Zielgerät übertragen bzw. exportiert wird. Die empfangenen Sicherheitsinformationen können durch die jeweiligen Zielgeräte beispielsweise in dem sicheren Speicher gespeichert werden. Die empfangenen Sicherheitsinformationen können ferner wie oben beschreiben durch die Zielgeräte verwendet werden, um die sichere Datenübertragung zwischen den Zielgeräten zu ermöglichen.

Das vorliegende Verfahren stellt somit ein Konfigurationsverfahren für Zielgeräte bereit, in dem ein hoher Schutz der übertragenen Daten erreicht wird. Insbesondere benötigen die Zielgeräte zu solch einer sicheren Datenübertragung keine Benutzer Eingabe- und Ausgabeschnittstellen, und müssen auch keine Sicherheitskonfigurationen oder Sicherheitsinformationen erzeugen können. Tatsächlich benötigt das Zielgerät lediglich eine Zielgerätschnittstelle, um mit dem Anlernmodul kommunizieren zu können, und einen Speicher zum Speichern der Sicherheitsinformation.

Zusätzlich können verschiedene Anlernmodule verschiedene Anlernmethoden verwenden, ohne dass die Zielgeräte selbst diese Methoden unterstützen müssen, wodurch eine Vielfalt der Sicherheitskonfigurationen erhöht werden kann.

Zudem bietet das Verfahren die Möglichkeit, durch ein zweistufiges Koppeln bzw. Pairing eine erhöhte Sicherheit der Datenübertragung zu erzielen. Nämlich kann zuerst ein sicheres Koppeln zwischen den Anlernmodulen, und dann ein sicheres Koppeln zwischen den Zielgeräten erfolgen.

Durch die Anlernmodule kann somit auf einfache Weise eine sichere Verbindung zwischen den Zielgeräten erfolgen. Somit wird ein benutzerfreundliches verbessertes Verfahren zur sicheren Datenübertragung zwischen mehreren Zielgeräten bereitgestellt.

Gemäß einer Ausführungsform umfasst das Verfahren ferner ein räumliches Verlagern des ersten und/oder zweiten Anlernmoduls zwischen dem Entkoppeln der ersten und zweiten Anlernmodule und dem Koppeln des ersten Anlernmoduls mit dem ersten Zielgerät und des zweiten Anlernmoduls mit dem zweiten Zielgerät.

Insbesondere kann das Koppeln der Anlernmodule in einer sicheren Umgebung, beispielsweise in einem Firmenhauptsitz stattfinden. Zumindest eines der Anlernmodule kann daraufhin verlagert werden und an einen anderen Ort gebracht werden. Beispielsweise können die beiden Anlernmodule zu zwei Zielgeräten gebracht werden, die sich in unterschiedlichen Produktionsstätten befinden. Somit kann auch eine Datenübertragung zwischen voneinander entfernten Zielgeräten sicher erfolgen.

Gemäß einer weiteren Ausführungsform enthält die erste und/oder zweite Sicherheitsinformation eine Übertragungsbedingung für ein Übertragen der ersten und/oder zweiten Sicherheitsinformation in das erste und/oder zweite Zielgerät. In dieser Ausführungsform erfolgt das Übertragen der ersten und/oder zweiten Sicherheitsinformation in das erste und/oder zweite Zielgerät nur, wenn die Übertragungsbedingung erfüllt ist.

Die Übertragungsbedingung ist insbesondere eine Voraussetzung für die Übertragung der Sicherheitsinformation in die Zielgeräte. Es ist auch möglich, dass die Übertragung der Sicherheitsinformation in die Zielgeräte nur zugelassen wird, wenn mehrere solche Bedingungen erfüllt sind.

Die Übertragungsbedingung kann in zumindest einem der Anlernmodule vorgespeichert sein. Ferner kann die Übertragungsbedingung je nach Anwendungsbedarf individuell durch einen Benutzer bestimmt werden und über eine Benutzerschnittstelle an zumindest ein Anlernmodul vorgegeben werden. Die Sicherheitsinformation kann dann unter Berücksichtigung der vorgespeicherten bzw. vorgegebenen Übertragungsbedingung durch die gekoppelten Anlernmodule erzeugt werden.

Gemäß einer weiteren Ausführungsform umfasst die Übertragungsbedingung zumindest eine der folgenden Bedingungen:
eine maximale Lebensdauer der ersten und/oder zweiten Sicherheitsinformation in den ersten und/oder zweiten Anlernmodulen;
eine maximale Anzahl an Übertragungen der ersten und/oder zweiten Sicherheitsinformation in das erste und/oder zweite Zielgerät;
eine Lokalisierung der Übertragung der ersten und/oder zweiten Sicherheitsinformation in das erste und/oder zweite Zielgerät;
ein Zeitpunkt der Übertragung der ersten und/oder zweiten Sicherheitsinformation in das erste und/oder zweite Zielgerät;
ein Datenformat für die erste und/oder zweite Sicherheitsinformation; und
ein bestimmtes Erzeugungsverfahren für das Erzeugen der ersten und der zweiten Sicherheitsinformation.

Die maximale Lebensdauer der Sicherheitsinformationen in den Anlernmodulen begrenzt insbesondere die Zeitdauer, über die die Sicherheitsinformationen an die Zielgeräte übertragen werden können. Er ist auch denkbar, dass die Anlernmodule die gespeicherte Sicherheitsinformation zerstören, sobald die maximale Lebensdauer erreicht wird. Falls beispielsweise ein Anlerngerät auf dem Weg zum zugeordneten Zielgerät verloren geht, kann die Sicherheitsinformation beim Erreichen der maximalen Lebensdauer gelöscht werden, wodurch ein Herausfinden der Sicherheitsinformation durch böswillige Dritte verhindert wird.

Die maximale Anzahl an Übertragungen einer Sicherheitsinformation in Zielgeräte gibt insbesondere an, wie oft ein einziges Anlerngerät die gespeicherte Sicherheitsinformation an verschiedene Zielgeräte übertragen darf. Beispielsweise kann das Anlernmodul die gespeicherte Sicherheitsinformation löschen, sobald die maximale Anzahl an Übertragung, beispielsweise eine einzige Übertragung, erreicht ist.

Die Übertragungsbedingung kann ferner eine Lokalisierung, insbesondere einen Ort oder ein räumliches Gebiet umfassen, an dem die Übertragung der Sicherheitsinformation in das Zielgerät zulässig ist. Die Übertragungsbedingung kann insbesondere auch Informationen über das Zielgerät enthalten, in das die Sicherheitsinformation übertragen werden soll. Ein Beispiel hierfür wäre eine Zielgerät-ID.

Die Übertragungsbedingung kann ferner einen Zeitpunkt oder einen Zeitraum umfassen, in dem die Übertragung der Sicherheitsinformation in das Zielgerät zulässig ist.

Ferner kann vorgegeben sein, welches Datenformat für die Sicherheitsinformation benötigt wird. Insbesondere ist dieses Datenformat durch das Zielgerät unterstützt.

Zudem kann die Übertragungsbedingung Informationen über ein zulässiges Erzeugungsverfahren, beispielsweise welcher Algorithmus für das Erzeugen der Sicherheitsinformation verwendet werden sollte, umfassen.

Die Übertragungsbedingung kann somit die Sicherheit des Konfigurationsverfahrens erhöhen. Insbesondere erfolgt eine Übertragung der Sicherheitsinformation in das Zielgerät nur, wenn alle gesetzten anwendungsspezifischen Bedingungen erfüllt sind.

Gemäß einer weiteren Ausführungsform umfasst das Verfahren, in einem Zustand, in dem das erste und das zweite Anlernmodul nicht gekoppelt sind, Empfangen einer ersten Authentisierungsinformation durch das erste Anlernmodul und/oder einer zweiten Authentisierungsinformation durch das zweite Anlernmodul;
Vergleichen der empfangenen ersten und/oder zweiten Authentisierungsinformationen mit vorbestimmten ersten und/oder zweiten Authentisierungsdaten für das erste und/oder das zweite Anlernmodul; und
Koppeln des ersten und zweiten Anlernmoduls, wenn die verglichenen empfangenen ersten und/oder zweiten Authentisierungsinformationen mit den vorbestimmten ersten und/oder zweiten Authentisierungsdaten übereinstimmen.

Gemäß dieser Ausführungsform erfolgt ein Koppeln der Anlernmodule nur, wenn dieses Koppeln beispielsweise durch einen Benutzer erlaubt wird. Hierzu kann jedes Anlernmodul eine separate Authentisierungsinformation empfangen. Beispielsweise kann der Benutzer über eine Benutzerschnittstelle ein Pin, ein Passwort, einen Fingerabdruck oder eine Antwort auf eine bestimmte Frage als Authentisierungsinformation an das Anlernmodul eingeben. Wenn das Anlernmodul bestimmt, dass die eingegebene Authentisierungsinformation mit dem vorbestimmten Authentisierungswert, der beispielsweise im Voraus in dem Anlernmodul gespeichert wurde, übereinstimmt, wird das Koppeln der Anlernmodule freigeschaltet bzw. zugelassen.

Durch die Eingabe der Authentisierungsinformation in das Anlernmodul kann eine Sicherheit des Verfahrens erhöht werden. Insbesondere kann nur ein angewiesener Benutzer das Koppeln der Anlernmodule und somit das Erzeugen der Sicherheitsinformation bewirken. Dadurch können Anlernmodule, die vor unbefugten Dritten sicher sind, bereitgestellt werden.

Gemäß einer weiteren Ausführungsform werden die Daten kryptografisch verschlüsselt zwischen dem ersten und zweiten Zielgerät übertragen.

Insbesondere werden Daten, die zwischen den Zielgeräten übertragen werden, mit einem Schlüssel, insbesondere einem gemeinsamen symmetrischen Schlüssel oder einem asymmetrischen Schlüssel, verschlüsselt und entschlüsselt. Als Schlüssel kann die durch das Zielgerät empfangene Sicherheitsinformation verwendet werden. Ferner kann der Schlüssel unter Berücksichtigung der Sicherheitsinformation durch das Zielgerät ermittelt bzw. berechnet werden. Dies kann zum Beispiel mit Hilfe eines Diffie-Hellman-Protokolls, eines Transportschichtsicherheitsprotokolls ("Transport Layer Security Protocol") oder eines sicheren Password-Protokolls ("Secure Remote Password Protocol") erfolgen.

Dadurch, dass die Daten kryptografisch verschlüsselt zwischen dem ersten und zweiten Zielgerät übertragen werden, wird eine besonders sichere Datenübertragung zwischen dem ersten und zweiten Zielgerät bereitgestellt.

Gemäß einer weiteren Ausführungsform können Daten, die zwischen den Zielgeräten übertragen werden, durch eine kryptografische Prüfsumme geschützt werden, die mit dem Schlüssel gebildet bzw. geprüft wird.

Gemäß einer weiteren Ausführungsform werden Daten zwischen dem ersten und dem zweiten Anlernmodul verschlüsselt übertragen.

Die verschlüsselte Übertragung der Daten zwischen den Anlernmodulen kann so wie die oben beschriebene verschlüsselte Datenübertragung zwischen den Zielgeräten erfolgen. Dadurch wird eine besonders sichere Datenübertragung zwischen den Anlernmodulen bereitgestellt.

Gemäß einer weiteren Ausführungsform umfasst das Verfahren ferner:
in dem ersten und/oder zweiten Anlernmodul und/oder in dem ersten und/oder zweiten Zielgerät, Ermitteln einer Zustandsinformation, die einen Zustand des ersten und/oder zweiten Anlernmodul und/oder des ersten und/oder zweiten Zielgerät angibt.

Die Zustandsinformation kann jegliche Information über einen aktuellen Zustand des Anlernmoduls und/oder Zielgeräts enthalten. Die Zustandsinformation umfasst insbesondere Informationen über ein Vorliegen der Sicherheitsinformation in den Anlernmodulen und/oder in den Zielgeräten oder Informationen über ein erfolgreiches Koppeln der Anlernmodule und/oder der Zielgeräte miteinander. Die Zustandsinformation kann auch ein Hashwert bzw. eine Prüfsumme oder eine Gültigkeitsdauer eines in den Anlernmodulen und/oder in den Zielgeräten ermittelten/eingerichteten Schlüssels sein. Die Zustandsinformation kann beispielsweise einem Benutzer zur Überprüfung und/oder Bestätigung bereitgestellt werden. Insbesondere kann dies auch nach Abschluss des Koppelns der Anlernmodule widerholbar erfolgen. Insbesondere kann somit überprüft werden, welche Sicherheitsinformation oder Sicherheitskonfiguration tatsächlich in dem Zielgerät eingerichtet wurde, wodurch eine Auditierung möglich ist. In Varianten wird die Zustandsinformation erst nach Abschluss des zuvor und im Folgenden erläuterten Verfahrens bereitgestellt.

Gemäß einer weiteren Ausführungsform wird zumindest ein weiteres Zielgerät mit einer weiteren Sicherheitsinformation mit Hilfe eines weiteren zugeordneten Anlernmoduls zur sicheren Datenübertragung mit dem ersten und dem zweiten Zielgerät gekoppelt.

Das Verfahren kann auf eine beliebige Anzahl an Daten austauschenden Zielgeräten erweitert werden. Eine beliebige Anzahl an Anlernmodulen kann dabei zusammen die Sicherheitsinformationen erzeugen.

Gemäß einer weiteren Ausführungsform wird ein Anlernmodul mit einer Schnittstelle vorgeschlagen, die dazu eingerichtet ist, an eine korrespondierende Schnittstelle eines korrespondierenden Anlernmoduls gekoppelt zu sein. Das Anlernmodul ist dazu eingerichtet, ausschließlich in einem mit dem korrespondierenden Anlernmodul gekoppelten Zustand eine Sicherheitsinformation abzuspeichern; und das Anlernmodul umfasst ferner eine zusätzliche Schnittstelle zum Koppeln des Anlernmoduls mit einem zugeordneten Zielgerät und zum Übertragen der Sicherheitsinformation in das Zielgerät.

Gemäß einer weiteren Ausführungsform entspricht das Anlernmodul dem ersten oder dem zweiten Anlernmodul.

Gemäß einer weiteren Ausführungsform verfügt das Anlernmodul über eine Benutzerschnittstelle, über die ein Benutzer Daten mit dem Anlernmodul austauschen kann.

Gemäß einer weiteren Ausführungsform sind die Schnittstelle und die zusätzliche Schnittstelle ein gleiches Element.

Die für das vorgeschlagene Verfahren beschriebenen Ausführungsformen und Merkmale gelten für das vorgeschlagene Datenübertragungssystem und für das vorgeschlagene Anlernmodul entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein Datenübertragungssystem gemäß einer ersten Ausführungsform;
Fig. 2 zeigt ein Datenübertragungssystem gemäß einer zweiten Ausführungsform;
Fig. 3, 4 und 5 zeigen ein Datenübertragungssystem gemäß einer dritten Ausführungsform;
Fig. 6 zeigt ein Anlernmodul gemäß einer ersten Ausführungsform;
Fig. 7 zeigt ein Verfahren zur Datenübertragung gemäß einer ersten Ausführungsform; und
Fig. 8 zeigt ein Verfahren zur Datenübertragung gemäß einer zweiten Ausführungsform.

In den Figuren sind gleiche oder funktionsgleiche Elemente mit denselben Bezugszeichen versehen worden, sofern nichts anderes angegeben ist.

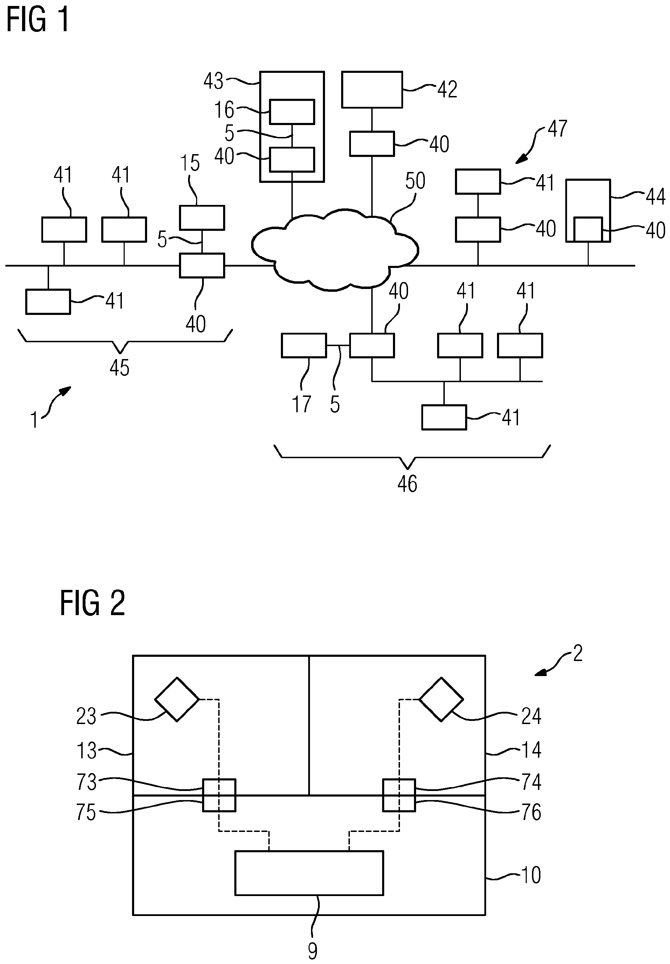

Fig. 1 zeigt ein Datenübertragungssystem 1 gemäß einer ersten Ausführungsform. Das Datenübertragungssystem 1 ist hier ein Automatisierungssystem 1, das Anlernmodule 15 - 17 und Zielgeräte 42 - 47, die über das Internet 50 als ein Kommunikationsnetz miteinander verbunden sind, umfasst. Die Zielgeräte 42 - 47 umfassen Sicherheits-Gateways 40 als Zielgerätübertragungseinrichtungen und Feldgeräte 41.

Das Anlernmodul 15 ist als erstes Anlernmodul dem Zielgerät 45 als erstes Zielgerät zugeordnet. Das Anlernmodul 16 ist als zweites Anlernmodul dem Zielgerät 43 als zweites Zielgerät zugeordnet. Das Anlernmodul 17 ist als weiteres Anlernmodul dem Zielgerät 46 als weiteres Zielgerät zugeordnet.

Die Zielgeräte 42 - 47 sind in dieser Ausführungsform zwei Automatisierungsnetze 45, 46, zwei Backend-Dienste 42, 43, und zwei IoT-Geräte 44, 47. Die Backend-Dienste 42 und 43 sind hier Datenbanken. Die Automatisierungsnetze 45, 46 und die IoT-Geräte 44, 47 umfassen jeweils mindestens ein Feldgerät 41, beispielsweise Maschinen, die ein Produkt herstellen.

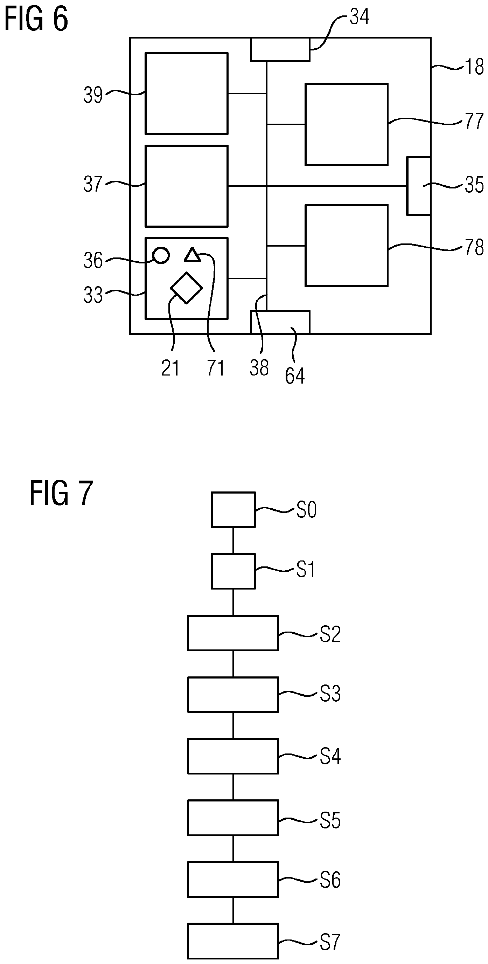

Das Automatisierungssystem 1 ist dazu eingerichtet, ein Verfahren zur Datenübertragung zwischen den Zielgeräten 42 - 47 durchzuführen. Solch ein Verfahren wird insbesondere in der Fig. 7 gezeigt. Im Folgenden wird eine Implementierung des Verfahrens aus der Fig. 7 mit dem Automatisierungssystem 1 der Fig. 1 beschrieben.

Eine Datenübertragung zwischen den Zielgeräten 42 - 47 erfolgt über das Internet 50, und ist kryptographisch geschützt. Der kryptographische Schutz erfolgt durch die Sicherheits-Gateways 40, die insbesondere Sicherheitsinformationen enthalten. Die Einrichtung der Sicherheits-Gateways 40 umfasst ein Anlernen und Bereitstellen der Sicherheitsinformationen. Dieses erfolgt mit Hilfe der Anlernmodule 15 - 17.

In einem Vorbereitungsschritt S0 werden die Zielgeräte 42 - 47 bereitgestellt. In einem weiteren Vorbereitungsschritt S1 werden die Anlernmodule 15 - 17 bereitgestellt.

In einem Schritt S2 werden die Anlernmodule 15 - 17 miteinander gekoppelt. In der Ausführungsform des Automatisierungssystem 1 aus der Fig. 1 wird jedes der Anlernmodule 15 - 17 über ein Kabel 5 mit dem Sicherheits-Gateway 40 der Zielgeräte 43, 45, 46 verbunden. Die Kopplung der Anlernmodule 15 - 17 und eine Datenübertragung zwischen den Anlernmodulen 15 - 17 erfolgt über die bereits über das Internet 50 verbundenen Sicherheits-Gateways 40.

In einem Schritt S3 erzeugen die Anlernmodule 15 - 17 die Sicherheitsinformationen. Hier handeln die Anlernmodule 15 - 17 über eine sichere Kopplung, beispielsweise unter Anwendung eines Diffie-Hellman-Protokolls, insbesondere eines authentifizierten Diffie-Hellman-Protokolls, jeweils einen Schlüssel als erste, zweite und weitere Sicherheitsinformation aus. In jedes der Anlernmodule 15 - 17 wird zumindest einer der drei ausgehandelten Schlüssel gespeichert.

In einem Schritt S4 werden die Anlernmodule 15 - 17 voneinander entkoppelt. Die Anlernmodule 15 - 17 werden für diesen Schritt zwar nicht räumlich verlagert, können aber nicht mehr miteinander über das Internet 50 kommunizieren.

In einem Schritt S5 werden die Anlernmodule 15 - 17 an die zugeordneten Zielgeräte 43, 45, 46 gekoppelt. Auch hierzu werden die Anlernmodule 15 - 17 nicht räumlich verlagert, aber eine Übertragung von Daten wird zwischen den Anlernmodulen 15 - 17 und den jeweiligen Sicherheits-Gateways 40 der Zielgeräte 43, 45, 46 ermöglicht.

Die Anlernmodule 15 - 17 übertragen in einem Schritt S6 den ermittelten Schlüssel in die Sicherheits-Gateways 40 der jeweiligen Zielgeräte 42 - 47. Hierbei überträgt das Anlernmodul 15 den in dem Anlernmodul 15 gespeicherten Schlüssel an den Sicherheits-Gateway 40 der Automatisierungsnetzes 45. Das Anlernmodul 16 überträgt den in dem Anlernmodul 16 gespeicherten Schlüssel an den Sicherheits-Gateway 40 des Backend-Dienstes 43. Das Anlernmodul 17 überträgt den in dem Anlernmodul 17 gespeicherten Schlüssel an den Sicherheits-Gateway 40 des Automatisierungsnetzes 46.

Die Sicherheits-Gateways 40 speichern die empfangenen Schlüssel und benutzen sie, um auf sicherer Weise Daten zwischen den Zielgeräten 42 - 47 über das Internet 50 zu übertragen. Hierzu werden zum Beispiel alle Daten, die von dem Automatisierungsnetz 45 in den Backend-Dienst 43 gesendet werden, mit dem Schlüssel aus dem Sicherheit-Gateways 40 des Automatisierungsnetzes 45 verschlüsselt und mit dem Schlüssel aus dem Sicherheit-Gateways 40 des Backend-Dienstes 43 entschlüsselt. Alternativ oder zusätzlich sind die Daten mit dem jeweiligen Schlüssel authentizitäts- und/oder integritätsgeschützt. In einer Variante werden alle Daten, die von dem Automatisierungsnetz 45 in den Backend-Dienst 43 gesendet werden, durch eine kryptografische Prüfsumme geschützt, die mit dem Schlüssel aus dem Sicherheits-Gateway 40 des Automatisierungsnetzes 45 gebildet wird und mit dem Schlüssel aus dem Sicherheits-Gateway 40 des Backend-Dienstes 43 geprüft wird.

Die Fig. 2 zeigt ein Datenübertragungssystem 2 gemäß einer zweiten Ausführungsform. Das Datenübertragungssystem 2 umfasst nicht dargestellte Zielgeräte, sowie Anlernmodule 13, 14 als erste und zweite Anlernmodule und eine Anlerneinrichtung 10. Die Anlerneinrichtung 10 umfasst eine Kopplungseinrichtung 9 und zwei USB-Stecker 75, 76 als Anschlussstecker. Das Anlernmodul 13 umfasst eine Sicherheitsinformation 23 als erste Sicherheitsinformation und einen USB-Port 73 als erste Schnittstelle. Das Anlernmodul 14 umfasst eine Sicherheitsinformation 24 als zweite Sicherheitsinformation und einen USB-Port 74 als zweite Schnittstelle.

Das Datenübertragungssystem 1 ist dazu eingerichtet, die Schritte S2 bis S4 aus dem in der Fig. 7 beschriebenen Verfahren durchzuführen. In dem Schritt S2 wird das Anlernmodul 13 mit dem Anlernmodul 14 gekoppelt. Dies erfolgt hier über die Anlerneinrichtung 10. Nämlich wird das Anlernmodul 13 über die Anschlussstecker 73, 75 mit der Anlerneinrichtung 10 gekoppelt. Das Anlernmodul 14 wird außerdem über die Anschlussstecker 74, 76 mit der Anlerneinrichtung 10 gekoppelt. Hierzu werden die Anschlussstecker 73 und 75, sowie die Anschlussstecker 74 und 76 jeweils ineinander gesteckt. Die Anlernmodule 13 und 14 können somit über die Anlerneinrichtung 10 miteinander Informationen austauschen. Es ist auch möglich, dass die Anlernmodule 13 und 14 zusätzlich direkt miteinander Daten austauschen können.

Die Anlerneinrichtung 10 kann dazu eingerichtet sein, nur eine Kopplung zwischen zwei vorbestimmten Anlernmodulen 13, 14 zuzulassen.

Die Sicherheitsinformationen 23, 24 werden in dem Schritt S3 mit Hilfe der Kopplungseinrichtung 9 erzeugt und in den Anlernmodulen 13, 14 gespeichert. Hier enthält die Kopplungseinrichtung 9 von den Anlernmodulen 13, 14 Identitätsinformationen, die durch die Kopplungseinrichtung 9 mit einem Algorithmus verarbeitet werden, um die Sicherheitsinformationen 23, 24 zu erzeugen. Die erzeugte Sicherheitsinformationen 23, 24 enthalten hier insbesondere eine maximale Lebensdauer als Übertagungsbedingung. Die jeweilige Kopplungseinrichtung 9 kann eigene unabhängige Sicherheitsinformationen zur sicheren Datenübertragung oder Erzeugung der Sicherheitsinformationen 23, 24 haben.

Die Anlernmodule 13, 14 mit den gespeicherten Sicherheitsinformationen 23, 24 werden dann in dem Schritt S4 von der Anlerneinrichtung 10 entfernt und zu den nicht dargestellten Zielgeräten, die den Anlernmodulen zugeordnet sind, gebracht.

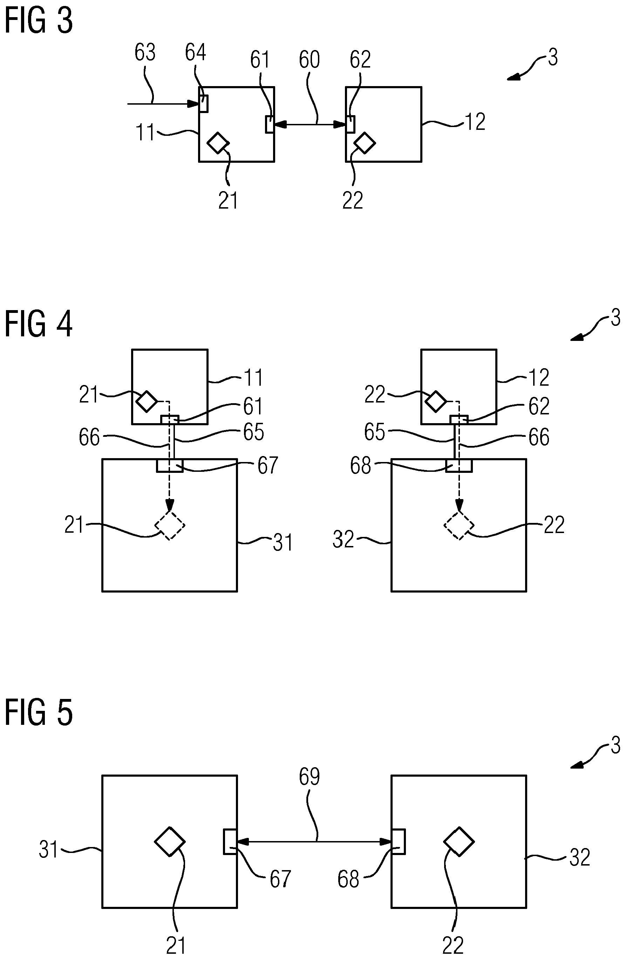

Die Fig. 3 - 5 zeigen ein Datenübertragungssystem 3 gemäß einer dritten Ausführungsform. Das Datenübertragungssystem 3 ist dazu eingerichtet, das Verfahren aus der Fig. 7 durchzuführen.

Die Fig. 3 zeigt zwei Anlernmodule 11, 12 als ein erstes und ein zweites Anlernmodul. Die Anlernmodule 11, 12 umfassen jeweils eine Schnittstelle 61, 62 als korrespondierende Schnittstelle. In jedem Anlernmodul 11, 12 ist ein Schlüssel 21, 22 als eine erste und eine zweite Sicherheitsinformation gespeichert. Das Anlernmodul 11 umfasst ferner eine Benutzerschnittstelle 64.

Das Datenübertragungssystem 3 ist in der Fig. 3 in einem Zustand gezeigt, in dem die Schritte S2 bis S4 der Datenübertragung durchgeführt werden können. Im Gegensatz zu dem System aus der Fig. 2 wird in dieser Ausführungsform keine Anlernmodulkopplungsvorrichtung benötigt. Stattdessen werden die Anlernmodule 11, 12 in dem Schritt S2 über die Schnittstellen 61 und 62 miteinander verbunden. Hier sind die Schnittstellen 61, 62 als WLAN-Schnittstellen ausgebildet, die über eine WLAN-Verbindung 60 gekoppelt sind.

In dieser Ausführungsform bedarf das Koppeln der Anlernmodule 11, 12 einer Freischaltung durch einen Benutzer. Das Anlernmodul 11 empfängt hierzu Benutzerdaten 63 über die Benutzerschnittstelle 64. Die Benutzerschnittstelle 64 ist hier ein USB-Port, der über ein USB-Kabel mit einem Benutzer-Computer (nicht dargestellt) verbunden werden kann. Die Benutzerdaten 63 umfassen hier ein Password als eine Authentisierungsinformation. Das durch das Anlernmodul 11 empfangene Password wird mit einem in dem Anlernmodul 11 vorgespeicherten Password als vorbestimmte Authentisierungsdatei verglichen. Stimmen die Passwörter überein, so wird das Koppeln der Anlernmodule 11, 12 zugelassen.

In dem in der Fig. 3 dargestellten gekoppelten Zustand erzeugen die Anlernmodule 11, 12 die Schlüssel 21, 22. Dies entspricht dem Schritt S3 des Verfahrens aus der Fig. 7. Hierzu empfängt das Anlernmodul 11 über die Benutzerschnittstelle 64 Bedingungen, die als Übertragungsbedingungen beim Erzeugen der Schlüssel 21, 22 berücksichtigt werden.

Die Bedingungen umfassen hier ein Erzeugungsverfahren der Schlüssel 21, 22. Nämlich gibt der Benutzer vor, dass die Anlernmodule 11, 12 die Schlüssel 21, 22 mittels einem Diffie-Hellman-Verfahren bestimmen sollen. Die Anlernmodule 11, 12 erzeugen dementsprechend, unter Verwendung des Diffie-Hellman-Verfahrens die Schlüssel 21, 22. Hierbei erfolgt eine Kommunikation zwischen den Anlernmodulen 11, 12 über das WLAN 60. Die Schlüssel 21 und 22 werden in den jeweiligen Anlernmodulen 11, 12 gespeichert.

In dem Schritt S4 können die Anlernmodule 11, 12 voneinander entkoppelt werden. Dies erfolgt durch ein Unterbrechen der WLAN-Verbindung 60.

Die Fig. 4 zeigt, zusätzlich zu den Anlernmodulen 11, 12, die mit Bezug auf die Fig. 3 beschrieben wurden, Zielgeräte 31, 32 als ein erstes und zweites Zielgerät. Die Zielgeräte 31, 32 umfassen jeweils eine Zielgerätschnittstelle 67, 68, die als eine WLAN-Schnittstelle eingerichtet ist.

Das Zielgerät 31 ist hier eine Türentriegelungseinrichtung zum Entriegeln einer Tür in einer Bank, und das Zielgerät 32 ist eine Türsteuereinrichtung, die die Türentriegelungseinrichtung zum Entriegeln der Tür steuert. Die Anlernmodule 11, 12 werden in dem Schritt S4 über die Schnittstellen 61, 62, 67, 68 mit den Zielgeräten 31, 32 gekoppelt. Die Anlernmodule 11, 12 sind somit jeweils über eine WLAN-Verbindung 65 mit den Zielgeräten 31, 32 verbunden.

In dem Schritt S6 überträgt das Anlernmodul 11 den Schlüssel 21 über die WLAN-Verbindung 65 in die Türentriegelungseinrichtung 32. Die Übertragung des Schlüssels 21 wird durch den gestrichelten Pfeil 66 dargestellt. Der übertragene Schlüssel 21 wird in der Türentriegelungseinrichtung 31 in einem sicheren Speicher gespeichert. Der übertragene Schlüssel 21 ist in der Fig. 4 gestrichelt dargestellt.

Zudem überträgt das Anlernmodul 12 den Schlüssel 22 über die WLAN-Verbindung 65 in die Türsteuereinrichtung 31. Die Übertragung des Schlüssels 22 wird durch den gestrichelten Pfeil 66 dargestellt. Der übertragene Schlüssel 22 wird in der Türsteuereinrichtung 32 in einem sicheren Speicher gespeichert. Der übertragene Schlüssel 22 ist in der Fig. 4 gestrichelt dargestellt.

Die Anlernmodule 11, 12 können nach Übertragen der Schlüssel 21, 22 in die Zielgeräte 31, 32 von den Zielgeräten 31, 32 entkoppelt werden.

Die Fig. 5 zeigt das Datenübertragungssystem 3 in einem Zustand, in dem Daten zwischen den Zielgeräten 31, 32 übertragen werden. Dieses entspricht dem Schritt S7 aus dem Verfahren aus der Fig. 7. Hierbei werden die Daten über eine WLAN-Verbindung 69 zwischen den WLAN-Schnittstellen 67 und 68 übertragen. Die übertragenen Daten umfassen beispielsweise einen Befehl von der Türsteuereinrichtung 32 an die Türentriegelungseinrichtung 31, die Tür zu entriegeln. Solche Daten werden mit den in den Zielgeräten 31, 32 gespeicherten Schlüsseln 21, 22 authentifiziert und/oder verschlüsselt und entschlüsselt, sodass die Datenübertragung zwischen den Zielgeräten 31, 32 sicher erfolgt. Solche Daten können weiterhin durch kryptografische Prüfsummen geschützt sein, die mit den Zielgeräten 31, 32 gespeicherten Schlüsseln 21, 22 gebildet bzw. geprüft werden, sodass die Datenübertragung zwischen den Zielgeräten 31, 32 sicher erfolgt.

In einer weiteren Ausführungsform könnten die Anlernmodule 13, 14 aus der Fig. 2 genauso wie die Anlernmodule 11, 12 verwendet werden, um die Schritte S4 bis S6 durchzuführen.

Fig. 6 zeigt ein Anlernmodul 18 gemäß einer ersten Ausführungsform. Das Anlernmodul 18 umfasst drei Schnittstellen 34, 35, 64, eine Speichereinrichtung 33, einen Bus 38, eine Erzeugungseinrichtung 78, eine Steuereinrichtung 77, eine Vergleichseinrichtung 37, ein Zustandseinrichtung 39, eine Sicherheitsinformation 21, eine Übertragungsbedingung 71 und vorbestimmte Authentisierungsdaten 36.

Die Schnittstelle 64 entspricht der Benutzerschnittstelle 64 aus der Fig. 3. Die Schnittstelle 34 ist ein USB-Port zum Koppeln des Anlernmoduls 18 mit einem korrespondierenden Anlernmodul. Die Schnittstelle 35 ist ein weiterer USB-Port zum Koppeln des Anlernmoduls 18 mit einem zugeordneten Zielgerät.

Die Speichereinrichtung 33 ist ein RAM-Speicher, in dem ein Schlüssel 21 als die Sicherheitsinformation, ein Übertragungsbedingung 71 und ein vorbestimmtes Passwort 36 als die vorbestimmte Authentisierungsdatei gespeichert sind.

Die Vergleichseinrichtung 37 ist dazu eingerichtet, ein über die Benutzerschnittstelle 64 empfangenes Password als Authentisierungsinformation mit dem vorbestimmten Passwort 36 zu vergleichen. Bei Übereinstimmen der Passwörter schaltet die Vergleichsvorrichtung 37 ein Koppeln des Anlernmoduls 18 an das korrespondierende Anlernmodul frei.

Die Zustandseinrichtung 39 ist dazu eingerichtet, eine Zustandsinformation zu bestimmen und zur Übertragung an den Benutzer über die Benutzerschnittstelle 64 bereitzustellen. Beispielsweise gibt die Zustandsinformation an, dass die Vergleichsvorrichtung 37 ein Übereinstimmen der Passwörter bestimmt hat.

Die Erzeugungseinrichtung 78 ist dazu eingerichtet, zusammen mit einer Erzeugungseinrichtung des korrespondierenden Anlernmoduls unter Berücksichtigung der Übertragungsbedingungen 71, die durch den Benutzer über die Benutzerschnittstelle vorgegeben wurde, den Schlüssel 21 zu bestimmen und in der Speichereinrichtung 33 zu speichern.

Die Steuereinrichtung 77 ist dazu eingerichtet, die Einrichtungen 33 - 35, 37, 39, 64 und 78 des Anlernmoduls 18 zu steuern. Innerhalb des Anlernmoduls erfolgt die Datenübertragung über den Bus 38.

Das Anlernmodul 18 kann die Anlernmodule 11 - 17 in den Fig. 1 - 4 ersetzen und in dem Verfahren zur Datenübertragung eingesetzt werden. Die Anlernmodule 11 - 17 aus den Fig. 1 - 4 können auch einen Teil oder alle Elemente der Anlernmoduls 18 umfassen.

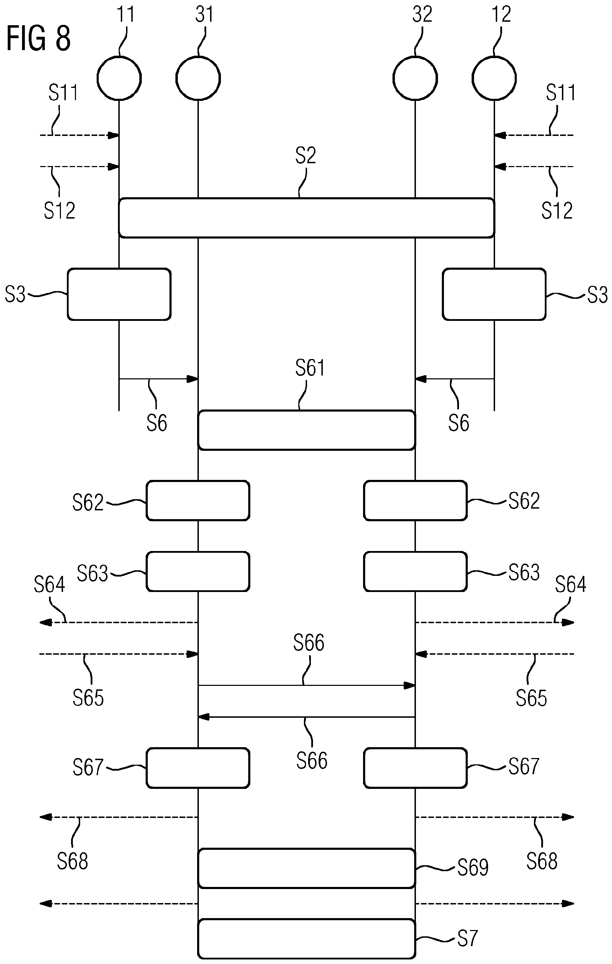

Fig. 8 zeigt ein Verfahren zur Datenübertragung gemäß einer zweiten Ausführungsform.

Die oben beschriebenen Datenübertragungssysteme 1 - 3 sind insbesondere auch dazu eingerichtet, das Verfahren zur Datenübertragung gemäß der zweiten Ausführungsform durchzuführen. Die Schritte S0 bis S7 des Verfahrens zur Datenübertragung gemäß der zweiten Ausführungsform sind identisch mit den Schritten S0 bis S7 des Verfahrens zur Datenübertragung gemäß der ersten Ausführungsform aus der Fig. 7. Zusätzlich werden in der zweiten Ausführungsform die Schritte S11, S12 und S61 - S69 durchgeführt.

In der Fig. 8 wird das Verfahren zur Datenübertragung mit Bezug auf die Anlernmodule 11, 12 und auf die Zielgeräte 31, 32 beschrieben. Das Verfahren zur Datenübertragung aus der Fig. 8 ist aber auch auf die Anlernmodule 13 - 18 und/oder auf die Zielgeräte 42 - 47 anwendbar.

In einem Schritt S11 beginnt das Koppeln der Anlernmodule 11, 12. Hier werden beispielsweise die Anlernmodule 11, 12 durch ein Kabel miteinander verbunden. In einem Schritt S12 werden zwei separate Authentisierungsinformationen 63 an die Anlerngeräte 11, 12 übertragen. Hierzu kann der Benutzer über die Benutzerschnittstelle 64 ein Passwort eingeben.

In dem Schritt S2 werden die Anlernmodule 11, 12 miteinander gekoppelt. Dabei werden die erhaltenen Authentisierungsinformationen 63 berücksichtigt.

In dem Schritt S3 erzeugen die Anlernmodule 11, 12 die Sicherheitsinformationen 21, 22. In dem Schritt S6 werden die Sicherheitsinformationen 21, 22 an die Zielgeräte 31, 32 gesendet.

In einem Schritt S61 werden die Zielgeräte 31, 32 miteinander gekoppelt. In jedem der Zielgeräte 31, 32 wird in einem Schritt S62 eine Sicherheitskonfiguration erzeugt. Diese Sicherheitskonfiguration ist ein Parameter, beispielsweise ein Schlüssel, der später zur sicheren Datenübertragung zwischen den Zielgeräten 31, 32 dienen soll. Die Sicherheitskonfiguration wird unter Berücksichtigung der Sicherheitsinformationen 21, 22 ausgehandelt und eingerichtet.

In einem Schritt S63 erzeugt jedes Zielgerät 31, 32 eine Sicherheitsinformationsidentifizierung als Zustandsinformation zum Identifizieren der eingerichteten Sicherheitsinformation 21, 22. Die Sicherheitsinformationsidentifizierung ist beispielsweise ein Hash-Wert, eine Gültigkeitsdauer oder eine Cipher-Suite der eingerichteten Sicherheitsinformation.

In einem Schritt S64 wird diese Sicherheitsinformationsidentifizierung über die Benutzerschnittstelle 64 an den Benutzer ausgegeben. Der Benutzer überprüft die empfangene Sicherheitsinformationsidentifizierung und bestätigt diese für jedes Zielgerät 31, 32 in einem Schritt S65.

In einem Schritt S66 tauschen die Zielgeräte 31, 32 aus, dass eine Bestätigung für die eingerichtete Sicherheitsinformationen 21, 22 erhalten wurde, und die jeweiligen eingerichteten Sicherheitsinformationen 21, 22 werden in einem Schritt S67 aktiviert.

In einem Schritt S68 geben die Zielgeräte 31, 32 über die Benutzerschnittstelle 64 eine weitere Zustandsinformation aus, die ein erfolgreiches Aktivieren der eingerichteten Sicherheitsinformationen 21, 22 angibt.

In einem Schritt S69 werden die Zielgeräte 31, 32 unter Berücksichtigung der eingerichteten Sicherheitsinformationen 21, 22 gekoppelt, und eine Zustandsinformation, die ein erfolgreiches Koppeln der Zielgeräte 31, 32 mit der eingerichteten Sicherheitsinformationen 21, 22 angibt, wird dem Benutzer über die Benutzerschnittstelle 64 ausgegeben.

In dem Schritt S7 erfolgt die sichere Datenübertragung zwischen den Zielgeräten 31, 32.

Obwohl die vorliegende Erfindung anhand von Ausführungsbeispielen beschrieben wurde, ist sie vielfältig modifizierbar. Beispielsweise können beliebige Verfahren durch die Anlernmodule verwendet werden, um die Sicherheitsinformation zu erzeugen. Auch die Zielgeräte können mit einem beliebigen Verfahren mit Hilfe der Sicherheitsinformation ein kryptographischen errichten. Auch die Art und Anzahl an Anlernmodulen, Schnittstellen, Zielgeräten, Übertragungsbedingungen, Authentisierungsinformationen und Zustandsinformationen sind modifizierbar. Die Reihenfolge der dargestellten Verfahrensschritte ist nicht zwingend und kann veränderte werden. Es können Schritte gleichzeitig oder vertuscht ablaufen. Insbesondere kann je nach eingesetztem Sicherheitsprotokoll eine Verschachtelung oder Verzahnung der hier beispielhaft einzeln genannten Verfahrensschritte auftreten.

### Bezugszeichenliste

- 1 - 3: Datenübertragungssystem
- 5: Kabel
- 9: Kopplungseinrichtung
- 10: Anlerneinrichtung
- 11 - 18: Anlernmodul
- 21 - 24, 28: Sicherheitsinformation
- 31, 32, 42 - 47: Zielgerät
- 34, 35, 61, 62, 73, 74: Schnittstellen
- 36: vorbestimmte Authentisierungsdaten
- 37: Vergleichseinrichtung
- 38: Bus
- 39: Zustandseinrichtung
- 40: Sicherheits-Gateway
- 41: Feldgerät
- 50: Internet
- 60, 66: WLAN-Verbindung
- 61, 62 63: Authentisierungsinformation
- 65: Pfeil
- 67, 68: Zielgerätschnittstelle
- 69: Datenübertragung
- 71: Übertragungsbedingung
- 75, 76: Anschlussstecker
- 77: Steuereinrichtung
- 78: Erzeugungseinrichtung

## Patentansprüche

1. Verfahren zur Datenübertragung zwischen einem ersten Zielgerät (31, 42 - 47) mit einer ersten Sicherheitsinformation (21, 23) und einem zweiten Zielgerät (32, 42 - 47) mit einer zweiten Sicherheitsinformation (22, 24), wobei die erste und die zweite Sicherheitsinformation (21 - 24) miteinander verknüpft sind und die Datenübertragung zwischen dem ersten und dem zweiten Zielgerät (31, 32, 42 - 47) insbesondere erfolgt, wenn die erste Sicherheitsinformation (21, 23) in dem ersten Zielgerät (31, 42 - 47) vorliegt und die zweite Sicherheitsinformation (22, 24) in dem zweiten Zielgerät (32, 42 - 47) vorliegt, umfassend:
Koppeln (S2) eines dem ersten Zielgerät (31, 42 - 47) zugeordneten ersten Anlernmoduls (11, 13, 15 - 18) mit einem dem zweiten Zielgerät (32, 42 - 47) zugeordneten zweiten Anlernmodul (12, 14 -18);
Erzeugen (S3) der ersten und der zweiten Sicherheitsinformation (21 - 24) in den gekoppelten ersten und zweiten Anlernmodulen (11 - 18) und Speichern der ersten Sicherheitsinformation (21, 23) in dem ersten Anlernmodul (11, 13, 15 - 18) und der zweiten Sicherheitsinformation (22, 24) in dem zweiten Anlernmodul (12, 14 -18);
Koppeln (S5) des ersten Anlernmoduls (11, 13, 15 - 18) mit dem ersten Zielgerät (31, 42 - 47) und des zweiten Anlernmoduls 11 - 178) mit dem zweiten Zielgerät (32, 42 - 47);
Übertragen (S6) der ersten Sicherheitsinformation (21, 23) von dem ersten Anlernmodul (11, 13, 15 - 18) in das erste Zielgerät (31, 42 - 47) und der zweiten Sicherheitsinformation (22, 24) von dem zweiten Anlernmodul (12, 14 -18) in das zweite Zielgerät (32, 42 - 47); und
Übertragen (S7) von Daten zwischen dem ersten und dem zweiten Zielgerät (31, 32, 42 - 47) mit Hilfe der ersten und zweiten Sicherheitsinformationen (21 - 24).

2. Verfahren nach Anspruch 1, wobei ferner zwischen dem Entkoppeln (S4) der ersten und zweiten Anlernmodule (11 - 18) und dem Koppeln (S5) des ersten Anlernmoduls (11, 13, 15 - 18) mit dem ersten Zielgerät (31, 42 - 47) und des zweiten Anlernmoduls 11 - 18) mit dem zweiten Zielgerät (32, 42 - 47)ein räumliches Verlagern des ersten und/oder zweiten Anlernmoduls (11 - 18) erfolgt.

3. Verfahren nach Anspruch 1 oder 2, wobei die erste und/oder zweite Sicherheitsinformation (21 - 24) eine Übertragungsbedingung (71) für ein Übertragen der ersten und/oder zweiten Sicherheitsinformation (21 - 24) in das erste und/oder zweite Zielgerät enthält (31, 32, 42 - 47); und
das Übertragen der ersten und/oder zweiten Sicherheitsinformation (21 - 24) in das erste und/oder zweite Zielgerät (31, 32, 42 - 47) nur erfolgt, wenn die Übertragungsbedingung erfüllt ist.

4. Verfahren nach Anspruch 3, wobei die Übertragungsbedingung zumindest eine der folgenden Bedingungen umfasst:
eine maximale Lebensdauer der ersten und/oder zweiten Sicherheitsinformation (21 - 24) in den ersten und/oder zweiten Anlernmodulen (11 - 18);
eine maximale Anzahl an Übertragungen der ersten und/oder zweiten Sicherheitsinformation (21 - 24) in das erste und/oder zweite Zielgerät (31, 32, 42 - 47);
eine Lokalisierung der Übertragung der ersten und/oder zweiten Sicherheitsinformation (21 - 24) in das erste und/oder zweite Zielgerät (31, 32, 42 - 47);
ein Zeitpunkt der Übertragung der ersten und/oder zweiten Sicherheitsinformation (21 - 24) in das erste und/oder zweite Zielgerät (31, 32, 42 - 47);
ein Datenformat für die erste und/oder zweite Sicherheitsinformation; und
ein bestimmtes Erzeugungsverfahren für das Erzeugen der ersten und/oder der zweiten Sicherheitsinformation (21 - 24).

5. Verfahren nach einem der Ansprüche 1 bis 4, ferner umfassend:
in einem Zustand, in dem das erste und das zweite Anlernmodul (11 - 18) nicht gekoppelt sind, Empfangen einer ersten Authentisierungsinformation (63) durch das erste Anlernmodul (11, 13, 15 - 18) und/oder einer zweiten Authentisierungsinformation (63) durch das zweite Anlernmodul (12, 12 - 18);
Vergleichen der empfangenen ersten und/oder zweiten Authentisierungsinformationen (63) mit vorbestimmten ersten und/oder zweiten Authentisierungsdaten (36) für das erste und/oder das zweite Anlernmodul (11 - 18); und
Koppeln des ersten und zweiten Anlernmoduls (11 - 18) miteinander, wenn die verglichenen empfangenen ersten und/oder zweiten Authentisierungsinformationen (63) mit den vorbestimmten ersten und/oder zweiten Authentisierungsdaten (36) übereinstimmen.

6. Verfahren nach einem der Ansprüche 1 bis 5, wobei die Daten kryptografisch verschlüsselt zwischen dem ersten und zweiten Zielgerät (31, 32, 42 - 47) übertragen werden.

7. Verfahren nach einem der Ansprüche 1 bis 6, wobei Daten zwischen dem ersten und dem zweiten Anlernmodul (11 -18) verschlüsselt übertragen werden.

8. Verfahren nach einem der Ansprüche 1 bis 7, ferner umfassend:
in dem ersten und/oder zweiten Anlernmodul (11 -18) und/oder in dem ersten und/oder zweiten Zielgerät (31, 32, 42 - 47), Ermitteln einer Zustandsinformation, die einen Zustand des ersten und/oder zweiten Anlernmoduls (11 -18) und/oder des ersten und/oder zweiten Zielgeräts (31, 32, 42 - 47) angibt.

9. Verfahren nach einem der Ansprüche 1 bis 8, wobei zumindest ein weiteres Zielgerät (42 - 47) mit einer weiteren Sicherheitsinformation mit Hilfe eines weiteren zugeordneten Anlernmoduls (15 - 17) zur sicheren Datenübertragung mit dem ersten und dem zweiten Zielgerät (31, 32, 42 - 47) gekoppelt wird.

10. Datenübertragungssystem (1, 2, 3) mit einem ersten und einem zweiten Zielgerät (31, 32, 42 - 47), und mit einem ersten und einem zweiten Anlernmodul (11 - 18), wobei
das erste und das zweite Anlernmodul (11 - 18) korrespondierende Schnittstellen (34, 61, 62, 73, 74) aufweisen, über die das erste und das zweite Anlernmodul (11 - 18) koppelbar sind;
das erste und das zweite Anlernmodul (11 - 18) dazu eingerichtet sind, ausschließlich in einem gekoppelten Zustand eine erste und eine zweite Sicherheitsinformation (21 - 24) abzuspeichern;
das erste und das zweite Anlernmodul (11 - 18) zusätzliche Schnittstellen (35, 61, 62, 73, 74) aufweisen, über die das erste und das zweite Anlernmodul (11 - 18) mit dem ersten und dem zweiten Zielgerät (31, 32, 42 - 47) derart koppelbar sind, dass die erste und zweite Sicherheitsinformation (21 - 24) in das erste und das zweite Zielgerät (31, 32, 42 - 47) übertragbar ist.

11. Datenübertragungssystem nach Anspruch 10, das dazu eingerichtet ist, derart implementiert zu werden, dass es das Verfahren nach einem der Ansprüche 1 bis 9 durchführt.

12. Anlernmodul (11 - 18) mit:
einer Schnittstelle (34, 61, 62, 73, 74), die dazu eingerichtet ist, an eine korrespondierende Schnittstelle (34, 61, 62, 73, 74) eines korrespondierenden Anlernmoduls (11 - 18) gekoppelt zu sein; wobei
das Anlernmodul (11 - 18) dazu eingerichtet ist, ausschließlich in einem mit dem korrespondierenden Anlernmodul (11 - 18) gekoppelten Zustand eine Sicherheitsinformation (21 - 24) abzuspeichern; und
das Anlernmodul (11 - 18) ferner eine zusätzliche Schnittstelle (35, 61, 62, 73, 74) zum Koppeln des Anlernmoduls (11 - 18) mit einem zugeordneten Zielgerät (31, 32, 42 - 47) und zum Übertragen der Sicherheitsinformation (21 - 24) in das Zielgerät (31, 32, 42 - 47) umfasst.

13. Anlernmodul nach Anspruch 12, das in dem Datenübertragungssystem (1, 2, 3) nach Anspruch 10 oder 11 dem ersten oder dem zweiten Anlernmodul (11 - 18) entspricht.

14. Anlernmodul nach Anspruch 12 oder 13, welches über eine Benutzerschnittstelle (64) verfügt, über die ein Benutzer Daten mit dem Anlernmodul (11 - 18) austauschen kann.

15. Anlernmodul nach einem der Ansprüche 12 bis 14, wobei die Schnittstelle (34, 61, 62, 73, 74) und die zusätzliche Schnittstelle (35, 61, 62, 73, 74) ein gleiches Element sind.

## Geänderte Patentansprüche

### Geänderte Patentansprüche gemäss Regel 137(2) EPÜ.

1. Verfahren zur Datenübertragung zwischen einem ersten Zielgerät (31, 42 - 47) mit einer ersten Sicherheitsinformation (21, 23) und einem zweiten Zielgerät (32, 42 - 47) mit einer zweiten Sicherheitsinformation (22, 24), wobei die erste und die zweite Sicherheitsinformation (21 - 24) miteinander verknüpft sind und die Datenübertragung zwischen dem ersten und dem zweiten Zielgerät (31, 32, 42 - 47) insbesondere erfolgt, wenn die erste Sicherheitsinformation (21, 23) in dem ersten Zielgerät (31, 42 - 47) vorliegt und die zweite Sicherheitsinformation (22, 24) in dem zweiten Zielgerät (32, 42 - 47) vorliegt, umfassend:
Koppeln (S2) eines dem ersten Zielgerät (31, 42 - 47) zugeordneten ersten Anlernmoduls (11, 13, 15 - 18) mit einem dem zweiten Zielgerät (32, 42 - 47) zugeordneten zweiten Anlernmodul (12, 14 -18), wobei das erste Anlernmodul (11, 13, 15 - 18) eine physikalisch von dem ersten Zielgerät (31, 42 - 47) trennbare Einrichtung ist und das zweite Anlernmodul (12, 14 - 18) eine physikalisch von dem zweiten Zielgerät (32, 42 - 47) trennbare Einrichtung ist;
Erzeugen (S3) der ersten und der zweiten Sicherheitsinformation (21 - 24) in den gekoppelten ersten und zweiten Anlernmodulen (11 - 18) und Speichern der ersten Sicherheitsinformation (21, 23) in dem ersten Anlernmodul (11, 13, 15 - 18) und der zweiten Sicherheitsinformation (22, 24) in dem zweiten Anlernmodul (12, 14 -18);
Koppeln (S5) des ersten Anlernmoduls (11, 13, 15 - 18) mit dem ersten Zielgerät (31, 42 - 47) und des zweiten Anlernmoduls 11 - 178) mit dem zweiten Zielgerät (32, 42 - 47);
Übertragen (S6) der ersten Sicherheitsinformation (21, 23) von dem ersten Anlernmodul (11, 13, 15 - 18) in das erste Zielgerät (31, 42 - 47) und der zweiten Sicherheitsinformation (22, 24) von dem zweiten Anlernmodul (12, 14 -18) in das zweite Zielgerät (32, 42 - 47); und
Übertragen (S7) von Daten zwischen dem ersten und dem zweiten Zielgerät (31, 32, 42 - 47) mit Hilfe der ersten und zweiten Sicherheitsinformationen (21 - 24).

2. Verfahren nach Anspruch 1, wobei ferner zwischen dem Entkoppeln (S4) der ersten und zweiten Anlernmodule (11 - 18) und dem Koppeln (S5) des ersten Anlernmoduls (11, 13, 15 - 18) mit dem ersten Zielgerät (31, 42 - 47) und des zweiten Anlernmoduls 11 - 18) mit dem zweiten Zielgerät (32, 42 - 47)ein räumliches Verlagern des ersten und/oder zweiten Anlernmoduls (11 - 18) erfolgt.

3. Verfahren nach Anspruch 1 oder 2, wobei die erste und/oder zweite Sicherheitsinformation (21 - 24) eine Übertragungsbedingung (71) für ein Übertragen der ersten und/oder zweiten Sicherheitsinformation (21 - 24) in das erste und/oder zweite Zielgerät enthält (31, 32, 42 - 47); und
das Übertragen der ersten und/oder zweiten Sicherheitsinformation (21 - 24) in das erste und/oder zweite Zielgerät (31, 32, 42 - 47) nur erfolgt, wenn die Übertragungsbedingung erfüllt ist.

4. Verfahren nach Anspruch 3, wobei die Übertragungsbedingung zumindest eine der folgenden Bedingungen umfasst:
eine maximale Lebensdauer der ersten und/oder zweiten Sicherheitsinformation (21 - 24) in den ersten und/oder zweiten Anlernmodulen (11 - 18);
eine maximale Anzahl an Übertragungen der ersten und/oder zweiten Sicherheitsinformation (21 - 24) in das erste und/oder zweite Zielgerät (31, 32, 42 - 47);
eine Lokalisierung der Übertragung der ersten und/oder zweiten Sicherheitsinformation (21 - 24) in das erste und/oder zweite Zielgerät (31, 32, 42 - 47);
ein Zeitpunkt der Übertragung der ersten und/oder zweiten Sicherheitsinformation (21 - 24) in das erste und/oder zweite Zielgerät (31, 32, 42 - 47);
ein Datenformat für die erste und/oder zweite Sicherheitsinformation; und
ein bestimmtes Erzeugungsverfahren für das Erzeugen der ersten und/oder der zweiten Sicherheitsinformation (21 - 24).

5. Verfahren nach einem der Ansprüche 1 bis 4, ferner umfassend:
in einem Zustand, in dem das erste und das zweite Anlernmodul (11 - 18) nicht gekoppelt sind, Empfangen einer ersten Authentisierungsinformation (63) durch das erste Anlernmodul (11, 13, 15 - 18) und/oder einer zweiten Authentisierungsinformation (63) durch das zweite Anlernmodul (12, 12 - 18);
Vergleichen der empfangenen ersten und/oder zweiten Authentisierungsinformationen (63) mit vorbestimmten ersten und/oder zweiten Authentisierungsdaten (36) für das erste und/oder das zweite Anlernmodul (11 - 18); und
Koppeln des ersten und zweiten Anlernmoduls (11 - 18) miteinander, wenn die verglichenen empfangenen ersten und/oder zweiten Authentisierungsinformationen (63) mit den vorbestimmten ersten und/oder zweiten Authentisierungsdaten (36) übereinstimmen.

6. Verfahren nach einem der Ansprüche 1 bis 5, wobei die Daten kryptografisch verschlüsselt zwischen dem ersten und zweiten Zielgerät (31, 32, 42 - 47) übertragen werden.

7. Verfahren nach einem der Ansprüche 1 bis 6, wobei Daten zwischen dem ersten und dem zweiten Anlernmodul (11 -18) verschlüsselt übertragen werden.

8. Verfahren nach einem der Ansprüche 1 bis 7, ferner umfassend:
in dem ersten und/oder zweiten Anlernmodul (11 -18) und/oder in dem ersten und/oder zweiten Zielgerät (31, 32, 42 - 47), Ermitteln einer Zustandsinformation, die einen Zustand des ersten und/oder zweiten Anlernmoduls (11 -18) und/oder des ersten und/oder zweiten Zielgeräts (31, 32, 42 - 47) angibt.

9. Verfahren nach einem der Ansprüche 1 bis 8, wobei zumindest ein weiteres Zielgerät (42 - 47) mit einer weiteren Sicherheitsinformation mit Hilfe eines weiteren zugeordneten Anlernmoduls (15 - 17) zur sicheren Datenübertragung mit dem ersten und dem zweiten Zielgerät (31, 32, 42 - 47) gekoppelt wird.

10. Datenübertragungssystem (1, 2, 3) mit einem ersten und einem zweiten Zielgerät (31, 32, 42 - 47), und mit einem ersten und einem zweiten Anlernmodul (11 - 18), wobei
das erste und das zweite Anlernmodul (11 - 18) korrespondierende Schnittstellen (34, 61, 62, 73, 74) aufweisen, über die das erste und das zweite Anlernmodul (11 - 18) koppelbar sind;
das erste und das zweite Anlernmodul (11 - 18) dazu eingerichtet sind, ausschließlich in einem gekoppelten Zustand eine erste und eine zweite Sicherheitsinformation (21 - 24) abzuspeichern;
das erste und das zweite Anlernmodul (11 - 18) zusätzliche Schnittstellen (35, 61, 62, 73, 74) aufweisen, über die das erste und das zweite Anlernmodul (11 - 18) mit dem ersten und dem zweiten Zielgerät (31, 32, 42 - 47) derart koppelbar sind, dass die erste und zweite Sicherheitsinformation (21 - 24) in das erste und das zweite Zielgerät (31, 32, 42 - 47) übertragbar ist; und
das erste Anlernmodul (11, 13, 15 - 18) eine physikalisch von dem ersten Zielgerät (31, 42 - 47) trennbare Einrichtung ist und das zweite Anlernmodul (12, 14 - 18) eine physikalisch von dem zweiten Zielgerät (32, 42 - 47) trennbare Einrichtung ist.

11. Datenübertragungssystem nach Anspruch 10, das dazu eingerichtet ist, derart implementiert zu werden, dass es das Verfahren nach einem der Ansprüche 1 bis 9 durchführt.

12. Anlernmodul (11 - 18) mit:
einer Schnittstelle (34, 61, 62, 73, 74), die dazu eingerichtet ist, an eine korrespondierende Schnittstelle (34, 61, 62, 73, 74) eines korrespondierenden Anlernmoduls (11 - 18) gekoppelt zu sein; wobei
das Anlernmodul (11 - 18) dazu eingerichtet ist, ausschließlich in einem mit dem korrespondierenden Anlernmodul (11 - 18) gekoppelten Zustand eine Sicherheitsinformation (21 - 24) abzuspeichern;
das Anlernmodul (11 - 18) ferner eine zusätzliche Schnittstelle (35, 61, 62, 73, 74) zum Koppeln des Anlernmoduls (11 - 18) mit einem zugeordneten Zielgerät (31, 32, 42 - 47) und zum Übertragen der Sicherheitsinformation (21 - 24) in das Zielgerät (31, 32, 42 - 47) umfasst; und
das Anlernmodul (11 - 18) eine physikalisch von dem zugeordneten Zielgerät (31, 32, 42 - 47) trennbare Einrichtung ist.

13. Anlernmodul nach Anspruch 12, das in dem Datenübertragungssystem (1, 2, 3) nach Anspruch 10 oder 11 dem ersten oder dem zweiten Anlernmodul (11 - 18) entspricht.

14. Anlernmodul nach Anspruch 12 oder 13, welches über eine Benutzerschnittstelle (64) verfügt, über die ein Benutzer Daten mit dem Anlernmodul (11 - 18) austauschen kann.

15. Anlernmodul nach einem der Ansprüche 12 bis 14, wobei die Schnittstelle (34, 61, 62, 73, 74) und die zusätzliche Schnittstelle (35, 61, 62, 73, 74) ein gleiches Element sind.
